# EUROPEAN PATENT SPECIFICATION

(11) **EP 0 994 050 B1**
(45) Date of publication and mention of the grant of the patent: **07.03.2007**
(21) Application number: 99118747.7
(22) Date of filing: 23.09.1999
(51) Int. Cl.: B65G 53/56

(54) **Apparatus for milling cereals**
Vorrichtung zum Mahlen von Getreide
Apparat pour le broyage de céréales

(30) Priority: 14.10.1998 IT MI982204
(43) Date of publication of application: 19.04.2000
(73) Proprietor: OCRIM S.p.A., 26100 Cremona (CR) (IT)
(72) Inventor: Fiorini, Maurizio, 26040 Pieve D'Olmi, (Cremona) (IT)
(74) Representative: Forattini, Amelia

(56) References cited:
- EP-A- 0 471 895
- CH-A- 440 125
- DE-C- 355 796
- GB-A- 1 022 527
- US-A- 3 785 613
- US-A- 4 506 703

## Description

The invention relates to an apparatus for milling cereals.

More particularly, the invention relates to an apparatus in which the cereals are milled by a pair of milling rollers. The amount of product fed to the rollers is determined, for example, by means of a capacitive sensor, according to Italian patent application MI 98 A 000117. The milling rollers rotate at mutually different speeds. In this manner, the different mutual speed of the two rollers which occurs in the contact region produces friction which does not simply crush the cereals but pulverizes them. In this step separation between the particles of the outer skin of the grain and the semolina also occurs. The dimensions of the particles obtained by virtue of a milling passage depend on the distance between the rollers, on the moisture, et cetera.

In order to obtain high-quality flour, as required by the market, it is necessary to adequately separate the semolina particles from the outer skin particles. The most effective method consists in sizing semolina batches and then sending them to specific machines which separate by density the pure semolina from the semolina that has not yet been cleaned and from the outer skin parts. These machines are known as plansifters. Optimum efficiency and capacity of these machines are closely linked to the particle size of the semolina to be cleaned.

The plansifter, that is to say, the machine that separates the semolina particles from the outer skin particles, operates according to density. A separation stage is generally provided after each milling stage in a cereal milling apparatus. In this manner it is possible to separate the outer skin particles from the semolina particles.

So this separating means provide different parts that should be moved through pipelines and perhaps stored in bins or sent to a bagging station.

The different separated parts are moved through the pipelines by means of a suitable pressurized pneumatic conveyance systems in which each different part is conveyed by a stream of gas, particularly air. For example, with one kg of air it is possible to convey 7-8 kg of product. The system generally uses a positive-displacement pump which generates air at a pressure which can vary between a few tenths of a bar up to pressures 10-20 times higher. The pressurized air stream is then fed, by means of a rotary cell provided with a hopper, with the material to be conveyed. The complete stream of air and conveyed product must then be routed automatically to various destinations. Diverting valves of various kinds are used to control the stream.

The simplest diverting valve consists of a baffle which is arranged at a bifurcation of the pipes for conveying the materials under pressure. The baffle is actuated by an external lever which closes one stream or the other of the bifurcation. This embodiment is very simple and inexpensive but it has limited pressure tightness. In practice it is difficult to use this solution for pressures above 0.3 bar. Furthermore, the fact that flow seepage occurs around the baffle due to its limited tightness causes deposits of material proximate to the baffle, on the side of the flow that should remain closed, so that the deposits subsequently hinder the actuation of the baffle for the flow reversal operation. Furthermore, the actuation of the baffle requires an external lever system which, by generating rather broad movements, causes accident-prevention concerns.

Another valve device is also known which uses a perforated cylindrical drum which opens and closes one or more ways. The drum can include one or more holes. A single passage hole allows to route the product from one inlet to two alternatively selectable outlets. Multiple holes for passage through the rotor can provide for multiple ways. Although this solution has improvements with respect to the preceding one, it does not ensure the required tightness, especially after prolonged operation. The gaskets that must ensure tightness are subject to wear during the rotation of the rotor, so that after a certain period of time the initial tightness can no longer be ensured. It is also necessary to consider that intervention on components of this type, for example for replacing gaskets, is very complicated, both due to the inherent complexity of the set of pipes that manage the system and because of the fact that it is difficult to identify in advance which valve unit is leaking. It is also necessary to consider that many of these systems are installed in complete cereal grinding mills in developing countries, where it is difficult to find specialized labor capable of working on delicate components such as these valve devices.

US patent 5,226,759 proposes a solution to the problem with a movable-drum system which however is very bulky and technically inherently very complicated, so as to lead to a cost increase both for the production of the device and for any repairs. US 4 449 863 analogously discloses a drum valve with similar drawbacks.

DE patent 355 796 relates to coal powder transfer plants, that work in continuous, so that the valves must be cleaned without extracting the rotor from the stator. The connection between stator and rotor is sealed by metal gaskets. A spring always pushes the rotor against the stator, also during the turning of the rotor. This arrangement cannot work with high pressure because the friction between stator and rotor, during turning of the rotor, rapidly wear the gaskets, except when metal gaskets are used. But metal gaskets cannot grant a high pressure seal. Finally the shape of the rotor can cause an accumulation of powdery material with formation of insects etc.

Swiss patent 440 125 relates to a valve that allow a translatory and rotary motion. However this arrangement does not grant a high pressure working because no sealing means are provided between rotor and stator. Furthermore the rotor is not properly guided during its motion, so at the closure it cannot properly fit its seat into the stator, so decreasing reliability and high pressure working. Finally the translatory and rotary actuators are not independent, since the two functions are entrusted to the same motor. This does not assure a reliable working. In fact, the translatory motion and the rotary motion tend to occur contemporaneously and not consecutively. This causes a wearing of the sealing seats.

GB 1 022 527 is similar to the preceding Swiss patent except that no teaching whatsoever is provided for carrying out the translatory and rotary movements. Perhaps these movements should be done manually.

US 4 506 703 not only does not relate with the field of cereal working, but also does not relate even with pneumatic transports. Also it is not even a valve to choose direction between two distinct pipelines, but is a liquid flow inverter. Also the translatory movement of the rotor can only be achieved manually acting on a screw.

EP 0 471 895 relates to the distribution of semi-fluid material. Also in this case the axial movement con only be performed manually.

US 3 785 613 relates to an extremely large valve for oil-plants, that is unsuitable in the field of the present invention.

The aim of the present invention is therefore to overcome the above drawbacks with an apparatus for milling cereals according to claim 1

The invention furthermore relates to a method for diverting the flow of cereals or derivatives thereof suspended in a gas stream, comprising:
-- the translatory motion of a rotor with respect to a stator, so as to move said rotor away from said stator;
-- the rotation of said rotor subjected to a translatory motion;
-- the translatory motion of said rotor with respect to said stator so as to move said rotor toward said stator; and
-- the compression of said rotor against said stator, so as to compress a gasket with a predetermined compression.

The invention will become apparent with reference to an embodiment thereof, as shown in the accompanying drawings, which are enclosed by way of nonlimitative example of the invention and wherein:
Figure 1 is an exploded perspective view of the device according to the invention;
Figure 2 is an exploded sectional view of a detail of the device of Figure 1;
Figure 3 is a sectional view of the device of Figure 1, in which the device is in the operating position;
Figure 4 is a sectional view of the device of Figure 1, in which the device is in the rotation position;
Figure 5 is a sectional plan view of the device according to the invention, illustrating the two rotation positions of the rotor;
Figure 6 is a perspective view of the device of Figure 1, as installed in the system;
Figure 7 is a schematic view of the apparatus according to the invention; and
Figure 8 is a schematic view of the device according to the invention.

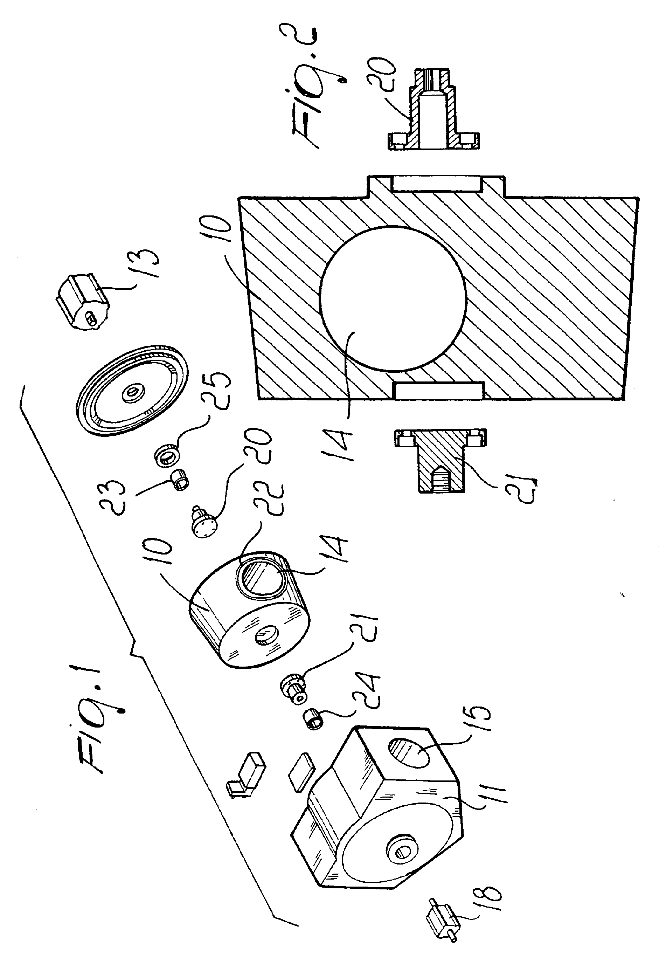

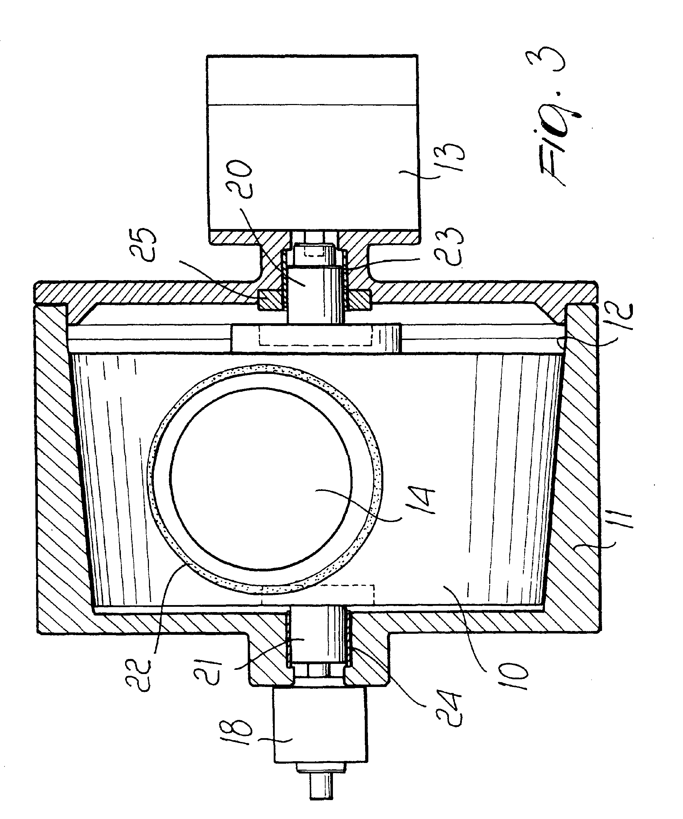

With reference to Figures 1 to 8, the roller mills for crushing cereals, the separators for separating a different part of the cereals, such as plansifters are not shown in the drawings, but are well known for a skilled person in the art.

The containers 30 contain a different part of the milled cereals, that has been separated. Such containers may be in the form of bins. The pipelines 31, 32, 33 deliver each different part to the containers. The pressurized pneumatic conveyance systems transfer the separated different part of the cereals, suspended in an air stream, through said pipelines, and operates by a rotary blower 35.

A valve device 10, 11 automatically directs the separated different part to different pipelines 31, 32, 33. The valve device has a conical or pyramidal rotor 10, a stator 11 with a conical or pyramidal seat for the rotor. A remotely controllable rotary actuator 13 is suitable to rotate the rotor 10 with respect to the stator 11. A remotely controllable translatory actuator 18 is suitable to make the rotor 10 perform a translatory motion with respect to the stator 11 along the rotation axis of the rotor. The pushing means 36 push the rotor 10 towards the stator 11.

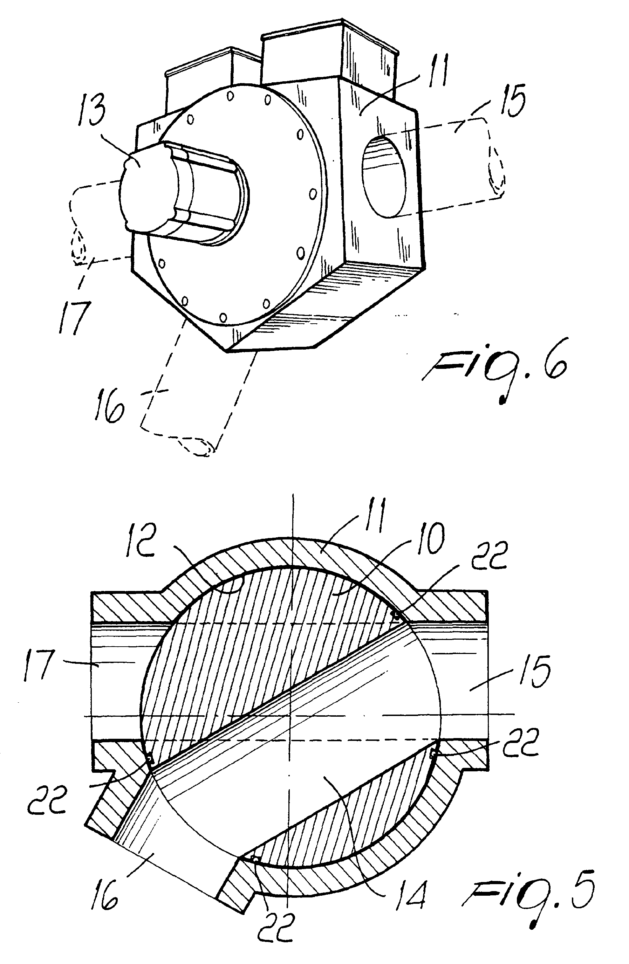

In practice, the inclination of the conical seat 12 of the stator 11 has the same taper as the rotor 10, so as to allow mating. Alternatively it is possible to provide a pyramidal seat both for rotor and stator. The rotary actuator 13 is capable of rotating the rotor 10 with respect to the stator 11. In particular, the rotary actuator is a rotator provided with electric limit switches. The rotator allows to turn the rotor, for example between two positions, described with particular reference to Figure 5, in which a passage 14 inside the rotor 10 is shown in solid lines in one position of the rotor 10 and is shown in dashed lines in a second position of the rotor 10 in which the rotor 10 has been rotated through approximately 150°. It is evident that this rotation allows to divert the incoming flow through the channel 15 toward the outlet 16 or, as an alternative, toward the outlet 17.

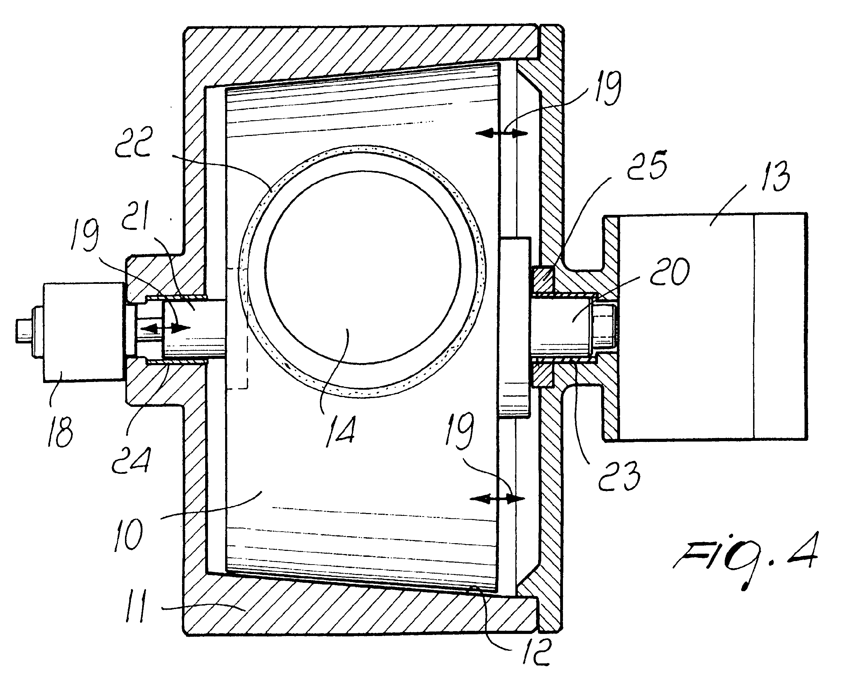

A translatory actuator 18 is provided which is generally constituted by a piston and is suitable to produce a translatory motion of the rotor 10 with respect to the stator 11 in the direction of the rotation axis of the rotor 10. This direction is the one shown, with particular reference to Figure 4, by the arrows 19.

In order to support the rotor 10 during this translatory motion, and during rotation, pivots 20 and 21 are used which guide the rotor in suitable seats provided in the stator 11.

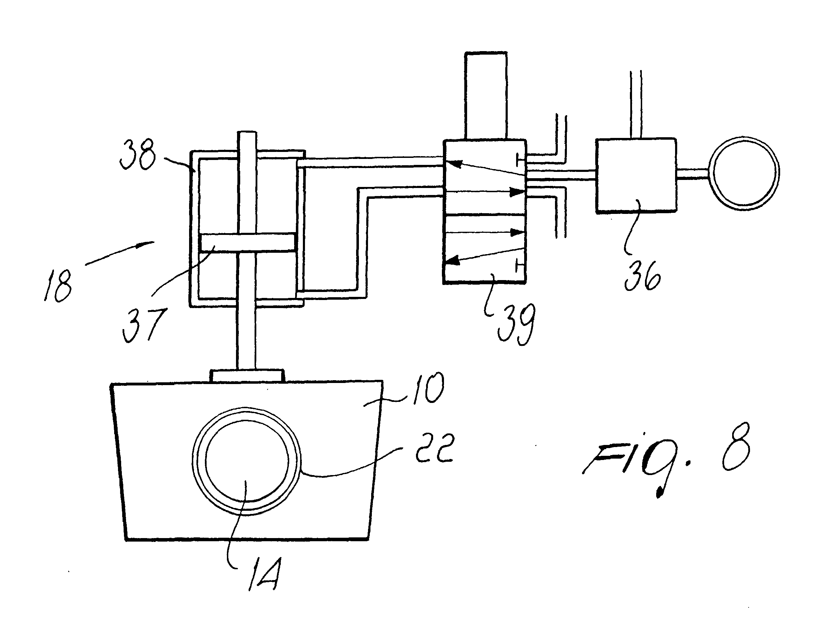

With particular reference to figure 8, the pressure control valve 36 form the pushing means that push the rotor 10 against the stator 11, to compress a gasket 22, made of an elastomeric material. The flow from the pressure control valve 36 is controlled by a directional control valve 39, that feeds the piston-cylinder group 37, 38.

In addition to the passage 14 provided in the rotor 10, it is possible to provide other passages, not shown in the figures, in order to provide multiple diverting ways. Likewise, in the illustrated embodiment there are, with particular reference to Figures 5 and 6, three connections with pipes 15, 16 and 17, but these connections can be increased if multiple diverting ways are provided.

The gaskets 22 are provided on the conical surface 12 of the stator 11 or on the conical surface of the rotor 10 at the passage 14. In the embodiment shown in the drawings, the gaskets 22 are arranged on the surface of the rotor 10. However, arrangement on the surface of the stator 11 would produce equivalent results.

The actuation of the translatory actuator 18 pushes the rotor 10 toward the stator 11 and therefore causes a compression of the gaskets 22, so as to increase the tightness of the device against high pressures. The gaskets 22 are arranged in a suitable slot of the type which widens inward so as to prevent the escape of the gaskets 22, as shown with particular reference to Figure 5.

The pivots 20 and 21, which support the rotor 10, are guided by the bushes 23 and 24 which are mounted on the stator 11, whilst the stroke limit 25, by engaging the stator 10, sets the maximum limit of the protrusion of the rotor 10 with respect to the stator 11. The two pivots 20, 21 are arranged on opposite sides of the rotor 10.

The practical operation of the device entails interrupting the stream and a first translatory motion of the rotor 10 with respect to the stator, so as to move the rotor 10 away from the stator 11. Then a signal of a microcapacitance sensor, applied to the piston 18, ensures that the rotor 10 has been disengaged from the stator 11. At this point the contact is closed and the rotor 10 is turned by means of the rotary actuator 13. Once rotation has occurred, an electric limit switch provided on the actuator 13 issues the command signal to remove air from the actuator and issues the clearance signal to feed air into the other chamber of the double-acting piston 18, so as to produce the approach of the rotor 10 to the stator 11. In this manner, the gaskets 22 engage the coupling between the rotor and the stator, ensuring the seal. Finally, the stream of suspended material is reactivated.

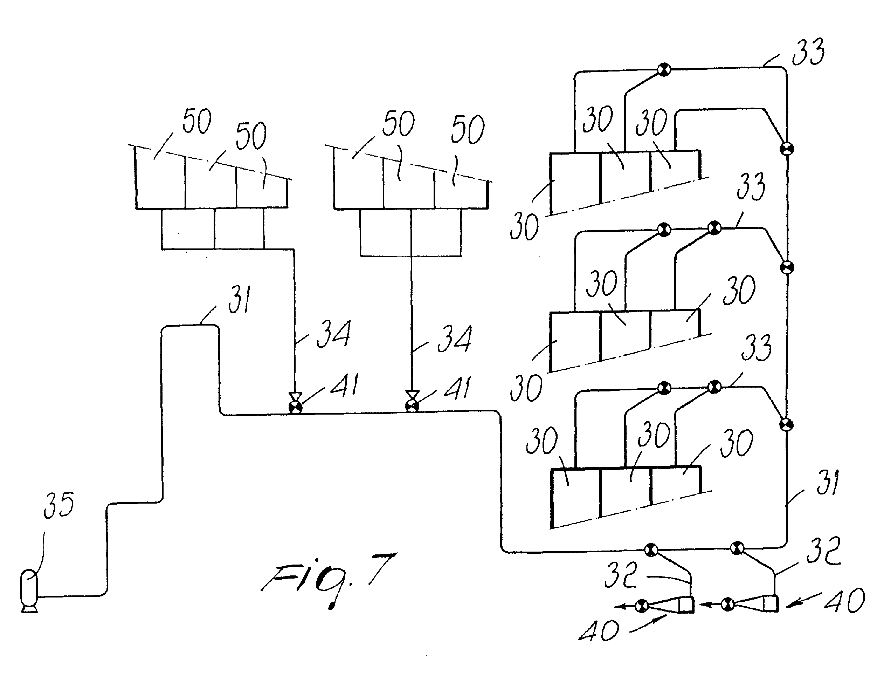

With particular reference to figure 7, a plurality of valve devices 10, 11 is used; each one of the devices feeds at least two containers 30 or one container 30 and a bagging station 40. The milled cereals stored in bins are fed through the pipelines 34 and the airlock feeders 41 to the pipelines 31, 32, 33. The airlock feeders 41 are well known for the skilled person in the art and allow the passage of the cereals from pipelines 34 to pipelines 31, but prevent passage of the air generated by the rotary blower 35 in the reverse direction.

The invention allows to achieve several advantages. In particular, it is possible to achieve tightness to pressures of several bars despite using a device which is extremely simple to produce and to operate in practice.

Moreover, there are no external moving parts, accordingly ensuring safety as regards both the operation of the system and accident-prevention concerns.

The external dimensions are modest, since the entire apparatus is contained in the stator 11.

During the rotation of the rotor 10 with respect to the stator 11 there is no friction, due to the protrusion of the rotor 10, so that wear of the gaskets 22 is avoided. Furthermore, simply by adjusting the pressure in the piston 18 it is possible to ensure the degree of compression of the gaskets 22 and therefore determine the required tightness.

The particular type of stator described makes the machine monolithic and therefore is not affected by the thermal expansions of the connecting pipes.

In the particular embodiment described there is no accumulation of the product, since there is a single passage 14 in the rotor.

The invention thus allows to achieve a dynamic seal instead of a static seal, as provided in all prior devices based exclusively on the original dimensions of the coupling. On the contrary, according to the invention the dimensions of the coupling can vary according to the requirements; moreover, the coupling pressure can be adjusted simply by acting on the pressure with which the piston 18 is actuated.

The invention is susceptible of numerous modifications and variations; thus, for example, it is possible to choose other kinds of gasket 22 or to provide a stator 11 of the type which is open in the lower part or in the upper part.

It is furthermore possible to provide multiple passages 14 and multiple connecting ways. Likewise, the means for moving the rotor 10 can be different from the one shown whilst remaining within the scope of the same inventive concept.

## Claims

1. An apparatus for milling cereals, comprising roller mills for crushing cereals, separators for separating a different part of the cereals, containers (30) for containing said different part, pipelines (31, 32, 33) for delivering said different part to said containers, pressurized pneumatic conveyance systems (35) for transferring said different part, suspended in an air stream, through said pipelines, a valve device (10,11) for automatically directing said different part to different pipelines; said valve device comprising: a conical or pyramidal rotor (10), a stator (11) with a conical or pyramidal seat for said rotor, a remotely controllable rotary actuator (13) which is suitable to rotate said rotor (10) with respect to said stator (11), a remotely controllable translatory actuator (18) which is independent from said rotary actuator and which is suitable to make said rotor (10) perform a translatory motion with respect to said stator (11) along the rotation axis of said rotor; pushing means (36) to push said rotor (10) towards said stator (11), said pushing means (36) generate a predetermined compression of said rotor (10) against said stator (11), so as to compress a gasket (22), preferably made of an elastomeric material.

2. An apparatus or a device according to claim 1, wherein said gasket (22) is arranged in a suitable slot, preferably of the type which widens inward, so as to prevent the escape of said gasket (22).

3. An apparatus or a device according to claim 2 in which said pushing means comprise a pressure control valve (36) for adjusting said predetermined compression of said rotor (10) against said stator (11).

4. An apparatus or a device according to at least one of the preceding claims, in which said translatory actuator (18) comprises an actuation piston-cylinder (37, 38) and a directional valve (39) to control said actuation piston-cylinder (37, 38).

5. An apparatus or a device according to at least one of the preceding claims, wherein a body of said rotor (10) is perforated in order to provide at least one passage (14) for said materials.

6. An apparatus or a device according to at least one of the preceding claims, wherein said stator has at least three openings (15, 16, 17) for connection to conveyance pipes (31, 32, 33).

7. An apparatus or a device according to at least one of the preceding claims, wherein said rotary actuator (13) is a rotator provided with electric limit switches.

8. An apparatus or a device according to at least one of the preceding claims, wherein a gasket (22) is provided on the conical surface of said stator (11) or of said rotor (10) at said passage (14).

9. An apparatus or a device according to claim 8, wherein the actuation of said translatory actuator (18) produces a compression of said gasket (22) and the tightness of the device to high pressures.

10. An apparatus or a device according to at least one of the preceding claims, wherein said rotation of said rotor (10) is supported by two pivots (20, 21), which are arranged on opposite sides of said rotor and which connect said rotor (10) to said stator (11).

11. An apparatus according to at least one of the preceding claims comprising a plurality of said valve devices (10, 11); each one of said valve devices feeding at least two containers (30) or one container (30) and a bagging station (40).

12. An apparatus according to at least one of the preceding claims, comprising at least an airlock feeder (41) to feed said different part to said pipelines (31, 32, 33).

13. An apparatus according to at least one of the preceding claims comprising a rotary blower (35) to power said pipelines (31, 32, 33) with pneumatic pressure.

## Patentansprüche

1. Gerät zum Mahlen von Getreide, mit Wälzmühlen zum Zermalmen von Getreide, Trennvorrichtungen zum Abtrennen eines verschiedenartigen Teils des Getreides, Behälter (30) zum Aufnehmen des verschiedenartigen Teils, Leitungen (31, 32, 33) zum Transportieren dieses verschiedenartigen Teils zu den Behältern, unter inneren Überdruck gesetzte pneumatische Transportsysteme (35) zum Befördern des verschiedenartigen Teils, der in einem Luftstrom schwebend gehalten wird, durch die Leitungen, einer Ventilvorrichtung (10, 11) zum automatischen Lenken des verschiedenartigen Teils zu unterschiedlichen Leitungen; wobei die Ventilvorrichtung aufweist: einen konischen oder pyramidalen Rotor (10), einen Stator (11) mit einem konischen oder pyramidalen Sitz für den Rotor, einen fernsteuerbaren rotierenden Stellantrieb (13), der geeignet ist den Rotor (10) bezüglich des Stators (11) zu drehen, einen femsteuerbaren translatorischen Stellantrieb (18), der unabhängig von dem rotierenden Stellantrieb ist, und der geeignet ist den Rotor (10) eine Translationsbewegung bezüglich des Stators (11) entlang der Drehachse des Rotors ausführen zu lassen; Pressvorrichtungen (36) zum Pressen des Rotors (10) zu dem Stator (11) hin, wobei die Pressvorrichtungen (36) ein vorbestimmtes Pressen des Rotors (10) gegen den Stator (11) erzeugen, um eine Dichtung (22), die vorzugsweise aus einem Elastomermaterial besteht, zusammenzudrücken.

2. Gerät oder Vorrichtung gemäß Anspruch 1, wobei die Dichtung (22) in einem geeigneten Schlitz, vorzugsweise von der Art, die sich nach innen hin weitet, angeordnet ist, um eine Undichtigkeit der Dichtung (22) zu verhindern.

3. Gerät oder Vorrichtung gemäß Anspruch 2, wobei die Pressvorrichtungen ein Druckbegrenzungsventil (36) zum Einstellen des vorbestimmten Pressens des Rotors (10) gegen den Stator (11) aufweisen.

4. Gerät oder Vorrichtung gemäß zumindest einem der vorherigen Ansprüche, wobei der translatorische Stellantrieb (18) einen Antriebskolbenzylinder (37, 38) und ein Richtventil (39) zur Steuerung des Antriebskolbenzylinders (37, 38) aufweist.

5. Gerät oder Vorrichtung gemäß zumindest einem der vorherigen Ansprüche, wobei ein Körper des Rotors (10) durchbohrt ist, um zumindest einen Durchgang (14) für die Materialien bereitzustellen.

6. Gerät oder Vorrichtung gemäß zumindest einem der vorherigen Ansprüche, wobei der Stator zumindest drei Öffnungen (15, 16, 17) zur Verbindung mit Beförderungsrohren (31, 32, 33) aufweist.

7. Gerät oder Vorrichtung gemäß zumindest einem der vorherigen Ansprüche, wobei der rotierende Stellantrieb (13) ein mit elektrischen Grenzschaltern versehener Rotator ist.

8. Gerät oder Vorrichtung gemäß zumindest einem der vorherigen Ansprüche, wobei eine Dichtung (22) an der konischen Fläche des Stators (11) oder des Rotors (10) an dem Durchgang (14) vorgesehen ist.

9. Gerät oder Vorrichtung gemäß Anspruch 8, wobei die Betätigung des translatorischen Stellantriebs (18) ein Zusammendrücken der Dichtung (22) und die Dichtheit der Vorrichtung gegenüber hohen Drücken bewirkt.

10. Gerät oder Vorrichtung gemäß zumindest einem der vorherigen Ansprüche, wobei die Drehung des Rotors (10) von zwei Drehzapfen (20, 21) unterstützt wird, die auf gegenüberliegenden Seiten des Rotors angeordnet sind, und die den Rotor (10) mit dem Stator (11) verbinden.

11. Gerät gemäß zumindest einem der vorherigen Ansprüche, mit einer Vielzahl der Ventilvorrichtungen (10, 11), wobei jede der Ventilvorrichtungen zumindest zwei Behälter (30) oder einen Behälter (30) und eine Einsackstation (40) befüllt.

12. Gerät gemäß zumindest einem der vorherigen Ansprüche, mit zumindest einem Luftschleusenaufgeber (41) zum Zuführen des verschiedenartigen Teils zu den Leitungen (31, 32, 33).

13. Gerät gemäß zumindest einem der vorherigen Ansprüche, mit einem rotierenden Gebläse (35), um die Leitungen (31, 32, 33) mit pneumatischem Druck zu beaufschlagen.

## Revendications

1. Appareil pour le broyage de céréales, comprenant des moulins à cylindres pour écraser les céréales, des séparateurs pour séparer une partie différente des céréales, des conteneurs (30) pour contenir ladite partie différente des tuyaux (31, 32, 33) pour transférer ladite partie différente auxdits conteneurs, des systèmes de transport pneumatiques pressurisés (35) pour transférer ladite partie différente, suspendue dans un courant d'air, à travers lesdits tuyaux, un dispositif de valve (10, 11) pour diriger automatiquement ladite partie différente vers des tuyaux différents ; ledit dispositif de valve comprenant : un rotor conique ou pyramidal (10), un stator (11) avec un siège conique ou pyramidal pour ledit rotor, un déclencheur de rotation susceptible d'être commandé à distance (13) approprié pour faire pivoter ledit rotor (10) par rapport audit stator (11), un déclencheur de translation susceptible d'être commandé à distance (18) indépendant dudit déclencheur de rotation et approprié pour faire effectuer audit rotor (10) un mouvement de translation par rapport audit stator (11) le long de l'axe de rotation dudit rotor ; des moyens de poussée (36) pour pousser ledit rotor (10) vers ledit stator (11), lesdits moyens de poussée (36) générant une compression prédéterminée dudit rotor (10) contre ledit stator (11), de manière à comprimer un joint (22), de préférence fait d'un matériau élastomère.

2. Appareil ou dispositif selon la revendication 1, dans lequel ledit joint (22) est disposé dans une encoche appropriée, de préférence du type qui s'élargit vers l'intérieur, de manière à éviter la sortie dudit joint (22).

3. Appareil ou dispositif selon la revendication 2, dans lequel lesdits moyens de poussée comprennent une valve de commande de la pression (36) pour ajuster ladite compression prédéterminée dudit rotor (10) contre ledit stator (11).

4. Appareil ou dispositif selon au moins l'une des revendications précédentes, dans lequel ledit déclencheur de translation (18) comprend un cylindre à piston de déclenchement (37, 38) et une valve de direction (39) pour commander ledit déclenchement du cylindre à piston (37, 38).

5. Appareil ou dispositif selon au moins l'une des revendications précédentes, dans lequel un corps dudit rotor (10) est perforé afin d'assurer au moins un passage (14) auxdits matériaux.

6. Appareil ou dispositif selon au moins l'une des revendications précédentes, dans lequel ledit stator comporte au moins trois ouvertures (15, 16, 17) pour le raccord aux tuyaux de transfert (31, 32, 33).

7. Appareil ou dispositif selon au moins l'une des revendications précédentes, dans lequel ledit déclencheur de rotation (13) est un rotateur pourvu d'interrupteurs de limite électriques.

8. Appareil ou dispositif selon au moins l'une des revendications précédentes, dans lequel un joint (22) est prévu sur la surface conique dudit stator (11) ou dudit rotor (10) au niveau dudit passage (14).

9. Appareil ou dispositif selon la revendication 8, dans lequel le déclenchement dudit déclencheur de translation (18) produit une compression dudit joint (22) et la résistance du dispositif aux pressions élevées.

10. Appareil ou dispositif selon au moins l'une des revendications précédentes, dans lequel ladite rotation dudit rotor (10) est supportée par deux pivots (20, 21) qui sont disposés sur des côtés opposés dudit rotor et qui relient ledit rotor (10) audit stator (11).

11. Appareil ou dispositif selon au moins l'une des revendications précédentes, comprenant plusieurs desdits dispositifs de valve (10,11), chacun desdits dispositifs de valve alimentant au moins deux conteneurs (30) ou un conteneur (30) et une station de mise en sachet (40).

12. Appareil ou dispositif selon au moins l'une des revendications précédentes, comprenant au moins un dispositif d'alimentation à clapet à air (41) pour alimenter ladite différente partie auxdits tuyaux (31, 32, 33).

13. Appareil ou dispositif selon au moins l'une des revendications précédentes, comprenant une soufflerie rotative (35) pour alimenter lesdits tuyaux (31, 32, 33) en pression pneumatique.
